# DEMANDE DE BREVET EUROPEEN

(11) **EP 1 426 249 A1**
(43) Date de publication de la demande: **09.06.2004**
(21) Numéro de dépôt: 03292997.8
(22) Date de dépôt: 01.12.2003
(51) Int. Cl.: B60R 21/20

(54) **Structure gonflable à déploiement guidé et véhicule correspondant**

(30) Priorité: 05.12.2002 FR 0215382
(71) Demandeur: Faurecia Industries, 92000 Nanterre (FR); SNPE, 75004 Paris Cedex 04 (FR)
(72) Inventeur: Galmiche, Etienne, 25460 Etupes (FR); Laspesa, Eric, 83140 Six Fours (FR); D'Emmanuelle, Laurent, 83200 Toulon (FR)
(74) Mandataire: Domenego, Bertrand

(57) **Abrégé**

Cet ensemble d'équipement (1) pour véhicule automobile comprend :
- une structure gonflable (2),
- un support (4) de structure gonflable,
- des moyens (6) de gonflage de la structure selon une direction de gonflage (D) pour la déployer,
- une plaque (8) de répartition d'effort lors de l'impact d'un occupant du véhicule sur la structure gonflable déployée,
- des moyens de guidage de la structure lors de son déploiement pour que, en configuration déployée, la structure s'étende selon une ligne directrice médiane (L) distincte de sa direction de gonflage (D).

Les moyens de guidage comprennent la paroi latérale (12) de la structure qui, en configuration déployée, est sensiblement tendue.

## Description

La présente invention concerne un ensemble d'équipement pour véhicule automobile, du type comprenant :
- une structure gonflable comprenant une paroi latérale et un fond, la structure gonflable ayant une configuration pliée et une configuration déployée,
- un support de structure gonflable,
- des moyens de gonflage de la structure selon une direction de gonflage pour la déployer,
- une plaque de répartition d'effort lors de l'impact d'un occupant du véhicule sur la structure gonflable déployée,
- des moyens de guidage de la structure lors de son déploiement pour que, en configuration déployée, la structure s'étende selon une ligne directrice médiane distincte de la direction de gonflage.

L'invention s'applique notamment aux ensembles d'équipement comprenant des structures gonflables de protection des genoux des occupants des véhicules automobiles.

On connaît des ensembles du type précité dans une telle application. Les moyens de guidage sont généralement constitués par des sangles qui s'étendent à l'intérieur de la structure gonflable et qui relient le support à la plaque de répartition d'effort.

Ces sangles permettent de provoquer, à la fin du déploiement de la structure, un mouvement de pivotement de la plaque de répartition vers le haut.

Ces moyens de guidage permettent de positionner de manière satisfaisante la plaque de répartition en face des genoux d'un occupant d'un véhicule automobile.

Toutefois, la nature de ces moyens de guidage, qui impose notamment de fixer les sangles au support et à la plaque de répartition d'effort, conduit à un ensemble d'équipement de coût relativement élevé.

Un but de l'invention est de résoudre ce problème en fournissant un ensemble d'équipement du type précité qui soit de coût réduit.

A cet effet, l'invention a pour objet un ensemble d'équipement du type précité, caractérisé en ce que les moyens de guidage comprennent la paroi latérale de la structure qui, en configuration déployée, est sensiblement tendue.

Selon des modes particuliers de réalisation, l'ensemble d'équipement peut comprendre l'une ou plusieurs des caractéristiques suivantes, prise(s) isolément ou selon toutes les combinaisons techniquement possibles :
- la paroi latérale de la structure possède une première diagonale plus courte qu'une deuxième diagonale de la paroi latérale pour que, lors du déploiement de la structure, la paroi latérale sensiblement tendue le long de la première diagonale amène la structure vers la ligne directrice médiane,
- l'ensemble comprend une gaine formant la paroi latérale de la structure gonflable et comprenant une première extrémité ouverte fixée au support et une deuxième extrémité ouverte fixée à la plaque de répartition, la plaque de répartition obturant la deuxième extrémité ouverte pour former le fond de la structure gonflable,
- en configuration déployée de la structure, la paroi latérale s'étend sensiblement sur tout son pourtour le long de génératrices parallèles à la ligne directrice médiane,
- la ligne directrice médiane est destinée à être inclinée vers le haut par rapport à la direction de gonflage lorsque l'ensemble d'équipement est installé dans un véhicule automobile,
- l'ensemble constitue un élément de protection des genoux d'un occupant du véhicule automobile.

L'invention a en outre pour objet un véhicule automobile caractérisé en ce qu'il comprend un ensemble d'équipement tel que défini précédemment.

L'invention sera mieux comprise à la lecture de la description qui va suivre, donnée uniquement à titre d'exemple, et faite en se référant aux figures 1 à 6 :
- la figure 1 étant une section longitudinale schématique d'un ensemble d'équipement selon un premier mode de réalisation de l'invention,
- la figure 2 étant une vue schématique en perspective du voile de fixation de la plaque de répartition d'effort sur le support de l'ensemble de la figure 1,
- les figures 3 et 4 étant des vues analogues à la figure 1, à échelle réduite, illustrant le déploiement de la structure gonflable de l'ensemble de la figure 1,
- la figure 5 étant une vue schématique en perspective illustrant un autre mode de réalisation de la gaine de la structure gonflable de l'ensemble de la figure 1, et
- la figure 6 étant une vue schématique de dessus illustrant la gaine de la figure 5 développée.

Dans tout ce qui suit, les orientations utilisées sont les orientations habituelles d'un véhicule automobile. Ainsi, les termes « avant », « arrière », « haut » et « bas » s'entendent par rapport à la position d'un conducteur du véhicule automobile et à son sens de marche.

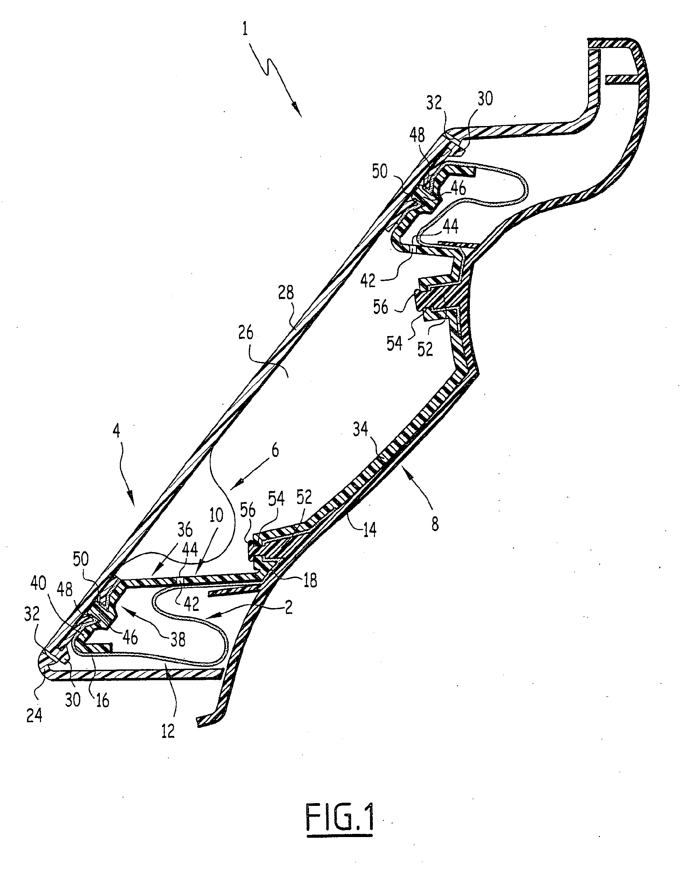

La figure 1 illustre schématiquement un ensemble d'équipement 1 pour véhicule automobile sous la forme d'une porte d'un vide-poches ou logement de réception d'objets. Ce vide-poches est prévu dans la planche de bord. La porte 1 forme donc une partie de la planche de bord. Elle est disposée sensiblement en regard des genoux d'un passager du véhicule automobile.

La porte 1 est classiquement articulée au reste de la planche de bord pour permettre d'accéder au vide-poches.

Les éléments de la planche de bord autres que la porte 1 sont classiques. Ils n'ont donc pas été représentés sur les figures et ne seront pas décrits en détail par la suite.

La porte 1 comprend essentiellement :
- une structure gonflable 2,
- un support avant 4 pour la structure gonflable 2,
- des moyens 6 de gonflage de la structure 2,
- une plaque arrière 8 de répartition d'effort lors de l'impact du passager sur la structure 2, et
- un voile frangible 10 de fixation de la plaque de répartition 8 sur le support 4.

La structure gonflable 2 comprend d'une part une gaine 12 qui forme sa paroi latérale, et comprend d'autre part la zone centrale 14 de la plaque de répartition 8 qui forme son fond comme cela sera décrit par la suite.

La gaine 12 est réalisée par exemple en un matériau tressé ou tissé et comprend une première extrémité avant 16 ouverte et une deuxième extrémité arrière 18 ouverte.

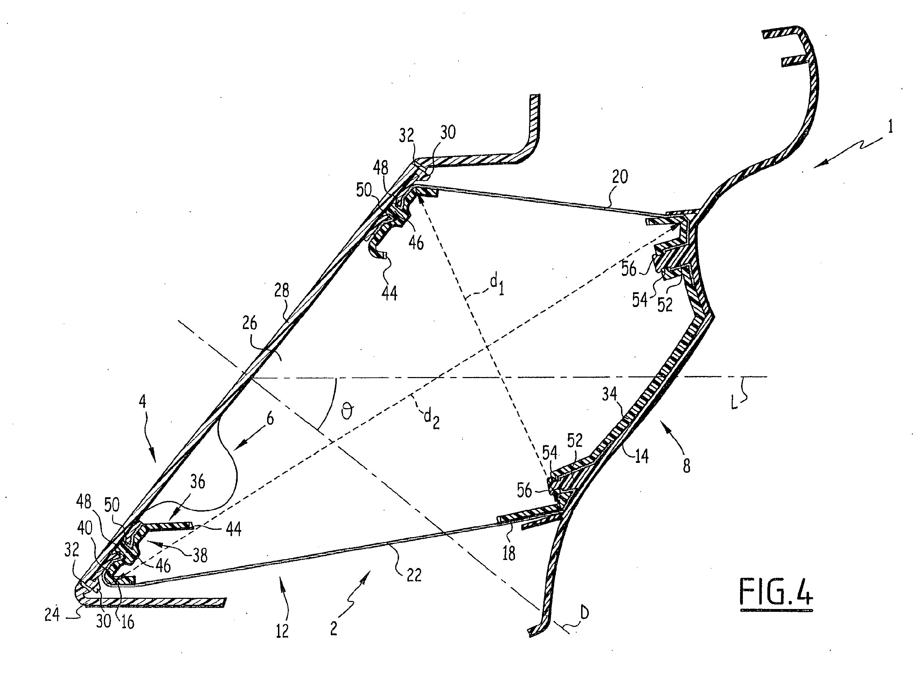

La structure 2 possède une configuration pliée représentée sur la figure 1 et une configuration déployée représentée sur la figure 4.

Dans la configuration déployée, la gaine 12 converge de son extrémité avant 16 vers son extrémité arrière 18.

La gaine 12 est alors tendue entre ses extrémités 16 et 18 et s'étend le long d'une ligne directrice médiane L sensiblement horizontale sur la figure 4. La gaine 12 a au voisinage de l'extrémité avant 16 et autour de la ligne L, un contour sensiblement rectangulaire.

La gaine 12 a au voisinage de l'extrémité arrière 18 et autour de la ligne L, un contour analogue, mais de dimensions plus faibles.

La région supérieure 20 de la gaine 12 est notablement plus courte, dans le plan de la figure 4, que la région inférieure 22 de la gaine 12.

On conçoit que les particularités géométriques décrites ci-dessus sont propres au mode de réalisation des figures 1 à 4 et peuvent, dans des variantes, être absentes.

Le support 4 forme doublure intérieure de la porte 1. Le support 4 comporte un cadre périphérique 24, délimitant intérieurement une ouverture 26, et un couvercle 28 de fermeture de l'ouverture 26.

Le cadre périphérique 24 et le couvercle 28 sont par exemple formés en matière(s) plastique(s).

Le couvercle 28 est fixé sur le cadre 24 par encliquetage de doigts 30 qui prolongent le couvercle 28 vers l'arrière et qui sont reçus dans des ouvertures 32 ménagées dans le cadre 24.

Le couvercle 28 est disposé en avant du cadre 24 et l'encliquetage a été assuré par déplacement du couvercle 28 vers l'arrière et vers le bas par rapport au cadre 24.

Les moyens 6 de gonflage de la structure 2 comprennent par exemple un générateur de gaz fixé sur le couvercle 28.

Le générateur 6 est de type classique et sa structure ne sera donc pas décrite plus en détail par la suite.

Le générateur 6 est fixé sur la face arrière du couvercle 28 et fait donc face à la plaque de répartition 8.

La plaque de répartition 8 forme, lorsque la structure 2 est en configuration pliée et la porte 1 est fermée comme représenté sur la figure 1, une partie de la surface extérieure de la planche de bord, et elle peut donc par exemple comprendre comme celle-ci une couche de matière plastique recouverte d'une peau d'habillage.

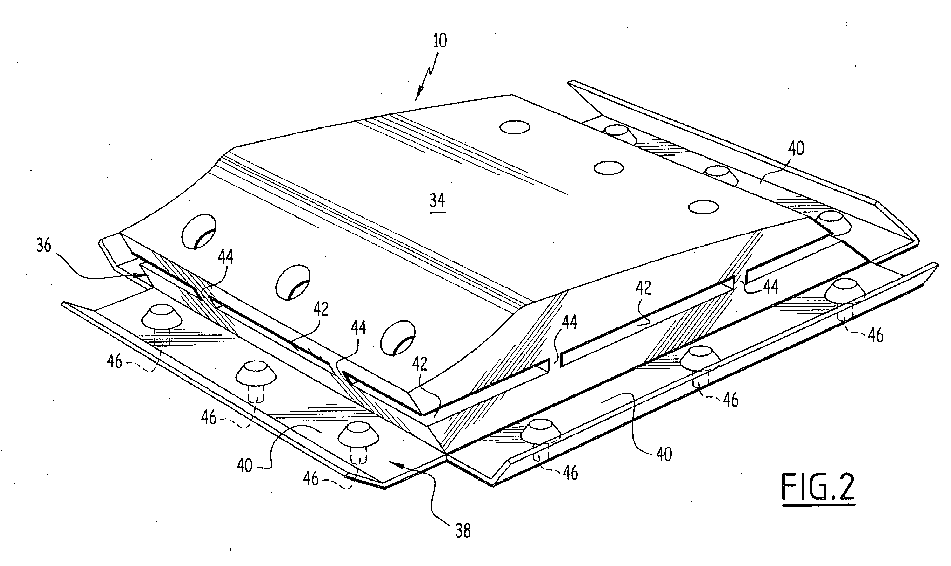

Comme illustré plus particulièrement par la figure 2, le voile de fixation 10 comprend une région centrale arrière 34 à contour sensiblement rectangulaire, une région intermédiaire 36 qui prolonge la région centrale arrière 34 vers l'avant et une région périphérique avant 38 qui prolonge la région intermédiaire 36 vers l'extérieur et qui comprend par exemple quatre pattes 40 disposées chacune sur un côté de la région intermédiaire 36.

La région intermédiaire 36 est une zone de moindre résistance.

Dans un mode de réalisation, cette zone de moindre résistance est obtenue grâce à des évidements 42 ménagés dans la région 36 et délimitant entre eux des pontets frangibles 44 reliant la région centrale 34 à la région périphérique 38.

Cette zone de moindre résistance travaille en traction pure. Ce mode de réalisation « à pontets frangibles » présente un avantage par rapport aux lignes fragilisées en « V » habituellement utilisées dans les couvercles d'air bag car, les sections des pontets frangibles 44 étant facilement calibrables, l'effort de rupture est très reproductible, et moins dépendant de la température et des conditions de gonflage de la structure.

Le voile de fixation 10 a par exemple été réalisé par moulage d'une matière plastique.

La région périphérique 38 du voile 10 est fixée au cadre 24 du support 4. Cette fixation est assurée dans l'exemple représenté par des embouts 46 qui prolongent la région périphérique 38 vers l'avant et qui sont reçus dans des orifices 48 du cadre 24. Les extrémités avant 50 des embouts 46 ont été déformées par exemple par fusion pour former des têtes élargies assurant une liaison rigide entre la région périphérique 38 du voile 10 et le cadre 24 du support 4. Les embouts 46 et leurs têtes 50 forment alors rivets de serrage du voile 10 sur le support 4.

L'extrémité avant 16 de la gaine 12 est pincée entre le cadre 24 et la région périphérique 38 du voile 10 en assurant ainsi la fixation de cette extrémité avant 16 au support 4.

On notera que les embouts 46 traversent alors des orifices ménagés dans l'extrémité avant 16 de la gaine 12 au droit des orifices 48.

De même, la région centrale 34 du voile 10 est fixée à la zone centrale 14 de la plaque de répartition 8 grâce à des embouts 52 qui prolongent la zone 14 vers l'avant et qui sont reçus dans des orifices 54 de la région centrale 34 du voile 10. Les extrémités avant 56 des embouts 52 ont été déformées par fusion pour former des têtes élargies. Les embouts 52 constituent donc des rivets de serrage du voile 10 sur la plaque 8.

L'extrémité arrière 18 de la gaine 12 est pincée entre la région centrale 34 du voile 10 et la zone centrale 14 de la plaque 8. Ainsi, l'extrémité 18 est fixée à la plaque de répartition 8. En outre, la zone 14 de la plaque de répartition 8 obture l'extrémité arrière 18 de la gaine 12 et forme donc le fond de la structure 2.

Pour réaliser la porte 1, on enfile la gaine 12 sur le voile 10 puis on fixe la région centrale 34 du voile 10 sur la plaque de répartition 8 en assurant simultanément la fixation de l'extrémité arrière 18 de la gaine 12 sur la plaque 8. On notera que la gaine 12 enfilée sur le voile 10 est alors prépositionnée. Dans une variante non-représentée, le voile 10 peut comprendre, en plus des embouts 46, des tétons de positionnement destinés à être engagés dans des ouvertures de la gaine 12.

Ensuite, on fixe le cadre 24 sur la région périphérique 38 du voile 10, ce qui permet d'obtenir simultanément la fixation de l'extrémité avant 16 de la gaine 12 au cadre 24.

Enfin, on fixe le couvercle 28, préalablement muni du générateur de gaz 6, par encliquetage sur le cadre 24.

En cas de choc détecté par un accéléromètre non-représenté raccordé au générateur de gaz 6, le fonctionnement du générateur 6 est déclenché. Le gaz produit par le générateur 6 remplit le volume intérieur de la structure 2 initialement en configuration pliée, jusqu'à ce que la pression exercée sur la région centrale 34 du voile 10 soit suffisamment importante pour rompre les pontets 44 du voile 10.

Une fois ces pontets 44 rompus, la région centrale 34 du voile 10 est séparée de sa région périphérique 38 et la plaque de répartition 8 peut se déplacer par rapport au support 4.

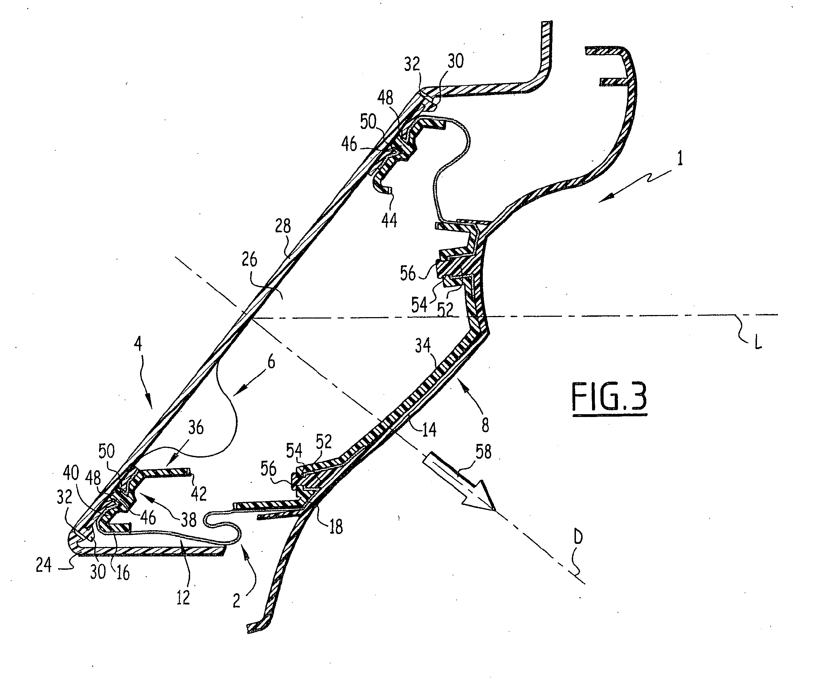

La structure 2 commence alors à se déployer comme illustré par la figure 3.

Ce déploiement initial s'effectue le long d'une direction de gonflage D sensiblement orthogonale au couvercle 28 du support 4, et donc inclinée vers le bas et vers l'arrière. Au cours de cette phase initiale du déploiement de la structure 2, la plaque de répartition 8 a donc tendance à se déplacer vers l'arrière et vers le bas, comme illustré par la flèche 58 sur la figure 3.

La diagonale d1 (en pointillés) reliant le bord supérieur de l'extrémité avant 16 de la gaine 12 au bord inférieur de l'extrémité arrière 18 de la gaine 12, va se tendre avant la diagonale d2 (en pointillés) reliant le bord inférieur de l'extrémité avant 16 au bord supérieur de l'extrémité arrière.

Les régions de côté de la gaine 12, qui relient les régions supérieure 20 et inférieures 22, et qui seront tendues le long de la diagonale d1 vont alors induire un mouvement de pivotement de la plaque de répartition 8 vers le haut, jusqu'à ce que les régions de côté soient tendues le long de la diagonale d2.

Ainsi, dans la phase terminale du déploiement de la structure 2, la plaque de répartition 8 ne se déplace plus selon la direction de gonflage D mais s'écarte progressivement de celle-ci pour venir se centrer, dans la configuration déployée de la figure 4, sur la ligne L.

La plaque de répartition 8 est donc à la fin du déploiement de la structure, située au-dessus de la direction de gonflage D, bien en face des genoux du passager. La gaine 12 est alors tendue depuis son extrémité avant 16 jusqu'à son extrémité arrière 18 de sorte que la ligne directrice L s'étend sensiblement horizontalement en formant un angle θ par rapport à la direction de gonflage D.

Ensuite, lorsque les genoux du passager viennent percuter la plaque de répartition 8, celle-ci répartit l'effort induit par les genoux sur sensiblement toute sa surface et permet ainsi à la structure 2 d'amortir de manière satisfaisante le choc des genoux du passager sur la planche de bord.

L'ensemble d'équipement 1 décrit ci-dessus présente les avantages suivants.

Grâce à l'utilisation du voile frangible 10, la plaque de répartition 8 est fixée au support 4 sans qu'un rattrapage des jeux ne soit nécessaire.

En outre, cette fixation est fiable de sorte que les jeux et les affleurements apparaissant dans le temps sont limités. Ainsi, les vibrations susceptibles d'apparaître au cours du temps lorsque le véhicule circule sont limitées.

L'aspect esthétique de l'ensemble 1 est donc satisfaisant et ce pour un coût réduit.

Par ailleurs, le voile de fixation 10 sert à la fois au pré-positionnement et à la fixation de la gaine 12 et permet donc d'atteindre des coûts de réalisation réduits.

En outre, le nombre de pièces utilisées est faible ce qui permet de diminuer d'autant les coûts de réalisation. On notera également que le moulage du voile 10 nécessite peu de parties mobiles dans le moule et que le voile 10 peut être démoulé facilement. Son coût de fabrication est donc réduit.

Pour autant, le voile 10 permet d'atteindre une rupture sous un effort relativement faible et bien déterminé.

De plus, le voile 10 forme organe de renfort de la plaque de répartition 8, ce qui permet de réduire son épaisseur et donc le coût de l'ensemble 1.

Dans d'autres variantes non-représentées, la fixation de la région centrale 34 et de la région périphérique 38 du voile 10 sur la plaque de répartition 8 et sur le support 4 peut être assurée par d'autres moyens que ceux décrits.

On peut en particulier utiliser des techniques de soudage et/ou d'encliquetage.

Dans un autre mode de réalisation non-représenté, le voile 10 peut être relié par sa région centrale au support 4 et par sa région périphérique à la plaque de répartition 8.

Par ailleurs, la gaine 12, qui est tendue dans la configuration déployée de la structure 2, forme elle-même les moyens de guidage de la structure lors de son déploiement, ce qui permet de réduire encore plus le coût de l'ensemble 1.

On notera que cette caractéristique peut être utilisée indépendamment de l'utilisation du voile frangible 10 et de la réalisation de la structure 2 sous forme d'une gaine à deux extrémités ouvertes.

Ainsi, la structure 2 peut être une structure classique à fond venu de matière avec sa paroi latérale, laquelle forme les moyens de guidage de la structure lors de son déploiement.

De manière plus générale, on notera que ces principes peuvent être utilisés pour guider la structure 2 selon une ligne directrice L qui peut être décalée latéralement et/ou verticalement par rapport à la direction de gonflage D afin d'atteindre la position finale souhaitée pour la plaque de répartition d'effort 8.

De manière générale également, la gaine 12 peut assurer, en plus du guidage de la structure déjà décrit, une modification de l'orientation de la plaque de répartition d'efforts 8 par rapport au support 4.

En effet, dans l'exemple décrit ci-dessus, la plaque 8 reste sensiblement parallèle au support 4. Toutefois, en jouant sur les longueurs des régions supérieure 20, inférieure 22 et de côté de la paroi latérale de la structure, on peut modifier l'orientation de la plaque 8 par rapport au support 4.

D'une manière plus générale encore, on peut associer des moyens auxiliaires de guidage aux moyens de guidage formés par la paroi latérale de la structure qui se tend sensiblement entre l'extrémité avant 16 et le fond 14 de la structure. Ces moyens auxiliaires de guidage peuvent comprendre un rebord de la planche de bord qui va retenir le bord inférieur ou le bord supérieur de la plaque de répartition 8 au début du gonflage de la structure.

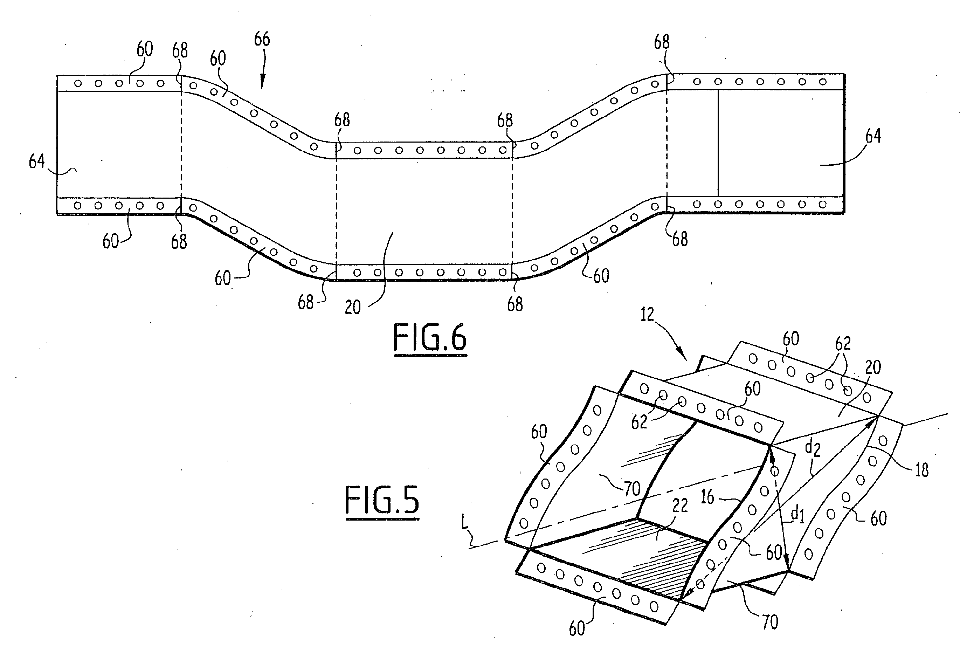

Les figures 5 et 6 illustrent une gaine 12 selon un autre mode de réalisation.

Comme illustré par la figure 5 où la gaine est en configuration déployée, la gaine 12 a pour l'essentiel un forme cylindrique à base sensiblement rectangulaire et s'étend donc sensiblement, dans sa partie courante, le long de génératrices parallèles à la ligne directrice médiane L.

La gaine 12 est munie à son extrémité avant 16 et à son extrémité arrière 18 de pattes 60 de fixation qui s'étendent le long des quatre côtés de la section rectangulaire.

Ces pattes 60 sont munies d'orifices 62 de réception d'organes de fixation. Les pattes 60 sont repliées vers l'extérieur pour être fixées, à l'extrémité avant 16, au support non-représenté, et à l'extrémité arrière 18 à la plaque de répartition d'effort non-représentée.

La fixation de la gaine 12 sur la plaque de répartition d'effort et sur le support peut être réalisée par des organes individuels et frangibles rapportés pour passer dans chaque orifice 62. La fixation n'est donc pas nécessairement assurée par un voile comme dans le mode de réalisation des figures 1 à 4.

La gaine 12 représentée sur les figures, a été obtenue par liaison des bords opposés 64 d'une bande 66 représentée à la figure 6. Cette bande 66 s'étend longitudinalement d'un bord 64 à l'autre et présente un décrochement central, destiné à former la région supérieure 20 de la gaine 12 et conférant ainsi à la gaine 12 la forme finale souhaitée. Des découpes 68 s'étendent depuis les bords longitudinaux de la bande 66 pour délimiter entre elles les pattes 60.

Les bords 64 sont par exemple liés l'un à l'autre par des coutures ou par calandrage, c'est-à-dire par soudage avec un enduit.

Bien entendu, la liaison entre les bords 64 peut être localisée à n'importe quel endroit de la gaine 12.

On notera que les régions supérieure 20 et inférieure 22 de la gaine 12 ont alors sensiblement la même longueur et que les régions de côté 70 de la gaine 12 ont sensiblement des formes de losange pour produire l'effet de rotation par tension le long de la diagonale d1 avant tension le long de la diagonale d2.

De manière générale, les principes ci-dessus peuvent être appliqués à d'autres ensembles d'équipement que des ensembles de protection des genoux et peuvent être destinés à la protection du conducteur.

## Revendications

1. Ensemble d'équipement (1) pour véhicule automobile, du type comprenant :
- une structure gonflable (2) comprenant une paroi latérale (12) et un fond (14), la structure gonflable ayant une configuration pliée et une configuration déployée,
- un support (4) de structure gonflable,
- des moyens (6) de gonflage de la structure selon une direction de gonflage (D) pour la déployer,
- une plaque (8) de répartition d'effort lors de l'impact d'un occupant du véhicule sur la structure gonflable déployée,
- des moyens de guidage de la structure lors de son déploiement pour que, en configuration déployée, la structure s'étende selon une ligne directrice médiane (L) distincte de la direction de gonflage (D),
**caractérisé en ce que** les moyens de guidage comprennent la paroi latérale (12) de la structure qui, en configuration déployée, est sensiblement tendue.

2. Ensemble d'équipement selon la revendication 1, **caractérisé en ce que** la paroi latérale (12) de la structure possède une première diagonale (d1) plus courte qu'une deuxième diagonale (d2) de la paroi latérale (12) pour que, lors du déploiement de la structure, la paroi latérale (12) sensiblement tendue le long de la première diagonale (d1) amène la structure vers la ligne directrice médiane (D).

3. Ensemble d'équipement selon la revendication 1 ou 2, **caractérisé en ce qu'**il comprend une gaine (12) formant la paroi latérale de la structure gonflable et comprenant une première extrémité ouverte (16) fixée au support (4) et une deuxième extrémité ouverte (18) fixée à la plaque de répartition (8), la plaque de répartition (8) obturant la deuxième extrémité ouverte (18) pour former le fond de la structure gonflable.

4. Ensemble d'équipement selon l'une des revendications précédentes, **caractérisé en ce que**, en configuration déployée de la structure, la paroi latérale (12) s'étend sensiblement sur tout son pourtour le long de génératrices parallèles à la ligne directrice médiane (L).

5. Ensemble d'équipement selon l'une des revendications précédentes, **caractérisé en ce que** la ligne directrice médiane (L) est destinée à être inclinée vers le haut par rapport à la direction de gonflage (D) lorsque l'ensemble d'équipement (1) est installé dans un véhicule automobile.

6. Ensemble d'équipement selon l'une des revendications précédentes, **caractérisé en ce qu'**il constitue un élément de protection des genoux d'un occupant du véhicule automobile.

7. Véhicule automobile, **caractérisé en ce qu'**il comprend un ensemble d'équipement (1) selon l'une des revendications précédentes.
